# EUROPÄISCHE PATENTSCHRIFT

(11) **EP 1 105 886 B1**
(45) Veröffentlichungstag und Bekanntmachung des Hinweises auf die Patenterteilung: **18.10.2006**
(21) Anmeldenummer: 99952349.1
(22) Anmeldetag: 10.08.1999
(51) Int. Cl.: H01B 13/14

(54) **VERFAHREN ZUR ISOLATION EINES SUPRALEITERS, INSBESONDERE MIT OXIDISCHEM HOCH-T c?-SUPRALEITERMATERIAL, SOWIE VERWENDUNG DES VERFAHRENS**
METHOD FOR INSULATING A SUPERCONDUCTOR, ESPECIALLY WITH AN OXIDIC HIGH T c? SUPERCONDUCTING MATERIAL AND USE OF SAID METHOD
PROCEDE POUR ISOLER UN SUPRACONDUCTEUR EN PARTICULIER AVEC UN MATERIAU SUPRACONDUCTEUR DE TYPE OXYDE, A TEMPERATURE CRITIQUE ELEVEE, ET APPLICATION DUDIT PROCEDE

(30) Priorität: 21.08.1998 DE 19838133
(43) Veröffentlichungstag der Anmeldung: 13.06.2001
(73) Patentinhaber: SIEMENS AKTIENGESELLSCHAFT, 80333 München (DE)
(72) Erfinder: ALBRECHT, Cord, D-91058 Erlangen (DE); GREINER, Robert, D-91083 Baiersdorf (DE); KUMMETH, Peter, D-91074 Herzogenaurach (DE); MASSEK, Peter, D-91301 Forchheim (DE); OCHSENKÜHN, Manfred, D-92318 Neumarkt (DE)
(74) Vertreter: Schmuckermaier, Bernhard
(86) Internationale Anmeldenummer: PCT/DE1999/002494
(87) Internationale Veröffentlichungsnummer: WO 2000/011684

(56) Entgegenhaltungen:
- FR-A- 2 091 363
- GB-A- 2 140 195

## Beschreibung

Die Erfindung bezieht sich auf ein Verfahren zur Herstellung einer allseitigen Umhüllung aus einem elektrischen Isolationsmaterial aus Kunststoff um mindestens einen Supraleiter, wie es z.B. aus der DE 23 45 779 A zu entnehmen ist. Die Erfindung betrifft ferner die Verwendung eines solchen Verfahrens.

Technische Supraleiter müssen für eine Verwendbarkeit in elektrischen Einrichtungen wie Wicklungen von Maschinen, Transformatoren, Magneten oder Kabeln im allgemeinen mit einer elektrischen Isolation versehen sein. Ein solches Erfordernis ist insbesondere auch bei Leitern mit oxidischem Hoch-T_{c}-Supraleitermaterial (HTS-Material) gegeben. Dabei sollen solche HTS-Leiter, die eine Drahtform (mit kreisförmigem Querschnitt) und insbesondere eine Bandform (mit rechteckigem Querschnitt) haben können, in einem einfach durchzuführenden Verfahren kontinuierlich mit einer isolierenden Umhüllung versehen werden können. Das Verfahren soll dabei sowohl für eine Einzelleiterisolation wie auch zur Isolation eines HTS-Leiteraufbaus in Form eines Mehrfach-Leiters, der aus supraleitenden Einzelleitern zusammengesetzt ist, oder eines Verbundleiters mit supraleitenden und normalleitenden Teilen geeignet sein.

Bisher sind keine in technischem Maßstab realisierten Verfahren bekanntgeworden, mit denen in einem kontinuierlichen Durchlauf ein Supraleiter oder -Leiteraufbau insbesondere mit HTS-Material allseitig mit einer isolierenden Umhüllung zu versehen ist. Dies ist unter anderem darauf zurückzuführen, daß die zur Zeit verfolgten HTS-Leiterkonzepte eine Bandform mit einem im Hinblick auf in der Supraleitungstechnik praktizierte Isolationsverfahren ungünstig hohen Aspektverhältnis (= Verhältnis von Leiterbreite zu Leiterdicke) vorsehen. Solche Leiter sind nämlich mit den bekannten Verfahren nur schwer gleichmäßig und mit geringer Dicke eines Isolationsmaterials zu beschichten. Bei einem aus der EP 0 292 126 B1 zu entnehmenden HTS-Leiter ist deshalb die Ümhüllung verhältnismäßig dick ausgeführt.

Klassische Lackierverfahren scheiden bisher für HTS-Leiter deshalb aus, weil sie zu einer Stromdegradation des Leiters führen können, die die Folge von den für diese Verfahren erforderlichen hohen Verfahrenstemperaturen und von überkritischen Biegebeanspruchungen ist, welche bei einem periodischen Führen des Leiters durch Tauchbäder mit einem vielfachen Umlenken über entsprechende Umlenkrollen auftreten.

Um eine Anwendung bekannter bandförmiger HTS-Bandleiter z.B. im Magnetwicklungsbau zu ermöglichen, wurden bisher separate Isolationsfolien, z.B. aus einem speziellen aromatischen Polyamid, das unter dem Handelsnamen "Kapton" bekannt ist und eine Dicke von beispielsweise 50 µm hat, zusammen mit dem Bandleiter gewickelt. Somit muß zur Herstellung von Wicklungen neben einer Abwickelvorrichtung für den Leiter zusätzlich eine entsprechende Vorrichtung für die Isolationsfolie vorgesehen werden, um eine Isolation zwischen den einzelnen Lagen bzw. Windungen einer Wicklung zu erstellen. Dabei kann die Schwierigkeit auftreten, daß der Leiter nicht ganz durch die Isolationsfolie umhüllt wird. Außerdem ist jeweils nur eine Trennschicht zwischen den einzelnen Leiterlagen vorhanden, wobei die seitlichen Leiterkanten unisoliert bleiben. Um eine sichere Isolation auch in diesen Bereichen zu gewährleisten, ist entweder ein Verguß des Wickelpaketes mit Gießharz oder die Verwendung von so breiten Isolationsfolien nötig, daß durch einen seitlichen Überstand der Folie über die jeweiligen Leiterkanten hinaus ein Kurzschluß zwischen den Leitern verhindert wird. Der Justieraufwand, um ein paralleles Wickeln von Leiter und Isolationsfolie zu ermöglichen, ist jedoch verhältnismäßig hoch.

Darüber hinaus ist aus der Isolationstechnik von Supraleitern mit sogenanntem klassischen Supraleitermaterial, die eine LHe-Kühltechnik erforderlich machen, bekannt, einen z.B. bandförmigen Supraleiter mit einer entsprechenden Kunststoffolie zu umwickeln (vgl. die eingangs genannte DE 23 45 779 A oder die DE 38 23 938 C2). Auch diese Verfahren sind nur mit verhältnismäßig hohem Aufwand durchzuführen. Außerdem müssen die verwendeten Folien eine hinreichende Dicke haben, um mechanische Beschädigungen bei dem Umwicklungsprozeß auszuscheiden.

Aus der DE 38 26 219 A1 geht ein Verfahren zur Ummantelung eines Supraleiters aus HTS-Material mit einem organischen Kunststoffmaterial hervor. Hierzu wird in eine rohrförmige Ummantelung aus einem schrumpffähigen Kunststoff ein feines Pulver aus dem HTS-Material eingefüllt und wird nach einem eventuellen Verdichten des so erhaltenen Pulverkerns die Ummantelung thermisch erhitzt, so daß diese auf den Pulverkern unter (weiterer) Verdichtung desselben aufschrumpft. Gegebenenfalls kann sich daran noch eine Verstreckung des Leiters anschließen. Entsprechende Leiter lassen sich nur schwer in großen Längen mit hinreichend homogener Stromtragfähigkeit und mit hoher kritischer Stromdichte über die Länge gesehen ausbilden. Außerdem ist eine Bandform kaum herstellbar.

Weiterhin ist es als äußerst schwierig anzusehen, die sehr geringen Querschnitte aktueller HTS-Bandleiter mit ihrem typisch großen Aspektverhältnis mit Isolationsband bzw. Isolationsfäden zu umspinnen.

Aufgabe der vorliegenden Erfindung ist es, ein Verfahren anzugeben, mit dem beliebige Supraleiter und insbesondere HTS-Leiter auf verhältnismäßig einfache Weise und kontinuierlich mit einer dünnen Umhüllung aus einem Isolationsmaterial versehen werden können. Das Verfahren soll insbesondere auch für dünne bandförmige HTS-Leiter verwendbar sein.

Zur Lösung dieser Aufgabe soll erfindungsgemäß das Verfahren mit den eingangs genannten Merkmalen dahingehend ausgestaltet sein, daß zu einem kontinuierlichen Umhüllungsprozeß bei einer die Supraleitungseigenschaften des Leiters praktisch nicht beeinträchtigenden Verfahrenstemperatur der Leiter aus einem sich in einer Vortriebsrichtung erstreckenden Führungskanal austritt, ein Schmelzeschlauch aus einem geschmolzenen thermoplastischen Isolationsmaterial in der Vortriebsrichtung aus einer Düse extrudiert wird, deren Austrittsöffnung den Leiter unter allseitiger Beabstandung umgibt, mit dem Vortrieb des Leiters der Schmelzeschlauch gedehnt und auf die Leiteroberfläche gezogen wird sowie der so auf die Leiteroberfläche aufgebrachte Schmelzeschlauch durch Abkühlung verfestigt wird.

Bei dem erfindungsgemäßen Verfahren erfolgt also das Aufbringen einer Umhüllung aus thermoplastischem Isolationsmaterial in Dünnschichtextrusionstechnik nach einem sogenannten Schlauch-Reckverfahren. Hierbei wird ein Schmelzeschlauch aus einer Düse extrudiert, der in seinen Dimensionen größer als der zu umhüllende Leiter ist, welcher durch einen zentralen Führungskanal in der Düsenmitte läuft. Dadurch entsteht ein Schlauch um den Leiter herum, der durch den Vortrieb des Leiters verstreckt, d.h. gedehnt wird, bis die endgültige, erwünschte Dicke (Stärke) der Umhüllungswand (Isolationsschicht) erreicht ist. Dieser Schlauch wird auf die Leiteroberfläche gezogen. Abhängig vom eingesetzten Isolationswerkstoff liegt dabei der sogenannte Reckgrad, d.h. die Verstreckung des Materials, im allgemeinen zwischen 5 und 15. Die Verstreckung kann vorteilhaft unter gleichzeitiger Einwirkung von Vakuum im Schlauchinneren erfolgen. Zusammen mit einer vorteilhaften Vorwärmung des Leiters vor dem Einlauf in den Führungskanal und/oder während des Hindurchziehens des Leiters durch diesen läßt sich so ein besonders guter und blasenfreier Haftsitz der Umhüllung auf dem Supraleiter erzeugen. Die dann erfolgende langsame Abkühlung z. B. an Luft bewirkt ein Einfrieren und eine spannungsfreie Verfestigung der Schmelze aus dem Isolationsmaterial auf dem Leiter.

Mit diesem Verfahren lassen sich folglich definiert dünne und fehlerfreie Umhüllungsschichten auf Supraleitern, insbesondere oxidischen Hochtemperatursupraleitern, mit an sich beliebiger Querschnittsform, insbesondere aber mit Bandform mit einem Aspektverhältnis von mindestens 3 realisieren.

Unter einem Supraleiter sei hierbei ein hinsichtlich seiner supraleitenden Eigenschaften wie Sprungtemperatur und kritische Stromdichte bereits fertiges Endprodukt mit langgestreckter Gestalt insbesondere in Draht- oder Bandform verstanden. Ein solches Leiterendprodukt braucht dabei nicht nur aus einem einzelnen Element zu bestehen, sondern kann auch eine Zusammensetzung/-fassung aus mehreren solcher (Teil-)Leiter oder Teilen von ihnen z.B. in Form einer Litze oder eines Röbelstabs darstellen. Der Leiter kann also mindestens einen Leiterkern aus dem Supraleitermaterial enthalten.

Es sind prinzipiell Beschichtungsanlagen bekannt, mittels derer isolierende Umhüllungen aus einem thermoplastischen Kunststoffmaterial (vgl. DE 26 38 763 A) durch Abstreifdüsen, in Druckummantelung oder im Schlauch-Reckverfahren (DE 24 09 655 A, 20 22 802 A, DE 21 10 934 A) auf Drähte aufzubringen sind. Die Drähte können dabei insbesondere aus Stahl (vgl. US 3 893 642), Al (vgl. DE 24 09 655 A) oder Cu (vgl. US 4 489 130 oder die genannte DE 21 10 934 A) bestehen und haben im allgemeinen kreisförmige Querschnittsflächen. Das mit solchen Anlagen auszuführende Beschichtungsverfahren wird auch als Extrusionsbeschichtung bezeichnet.

Der Erfindung liegt nun die Erkenntnis zugrunde, daß das an sich bekannte Verfahren zur Beschichtung von Supraleitern, insbesondere von oxidischen HTS-Leitern, geeignet ist, wobei sich die eingangs genannten Schwierigkeiten vermeiden lassen.

Dies ist insbesondere bei einer Bandform des Supraleiters von Bedeutung. Unter einer Bandform sei in diesem Zusammenhang jede beliebige Rechteckform mit eckigen oder abgerundeten Kanten verstanden. Vorzugsweise kann aber die Rechteckform ein verhältnismäßig großes Aspektverhältnis aufweisen, wie es insbesondere bei dünnen Bandleitern gegeben ist. Durch Beschichtung nach dem erfindungsgemäßen Schlauch-Reckverfahren lassen sich porenfreie Isolierschichten realisieren, die insbesondere auch auf den für HTS-Leiter typischen Oberflächen gut haften.

Die Anwendung dieses Verfahrens auf oxidische HTS-Leiter mit ihrer typischen thermischen und mechanischen Empfindlichkeit erschließt für diese Leitertypen ein erweitertes Anwendungsgebiet aufgrund der einfacheren Verwendbarkeit bereits vorisolierter Leiter. Außerdem sind beträchtliche Kosteneinsparungen gegenüber den bisher in der Supraleitungstechnik angewandten Verfahren zu erwarten. Neben den Einsparungen durch eine rationelle, schnelle Extrusionstechnik liegt ein erhebliches Ratiopotential in den verwendbaren Isolationsmaterialien, die im Vergleich zu bekannten Isolierfolien deutlich billiger sind.

Mit dem erfindungsgemäßen Verfahren ist eine kontinuierliche Beschichtung eines Supraleiters (bzw. eines Supraleiteraufbaus oder einer Supraleiterzusammensetzung) möglich, da das Isolationsmaterial aus einem Vorratsbehälter gefördert werden kann, der sich jederzeit nachfüllen läßt. Außerdem ist mit dem Verfahren die Dicke der isolierenden Umhüllung in einem weiten Bereich variabel und mit hinreichender Genauigkeit einzustellen. Da z.B. jeder Einzelleiter vollständig isoliert sein kann, ist bei Bandleiterwicklungen eine doppelte Isolationssicherheit gegeben, weil die Leiter durch eine zweifache Isolationsschicht getrennt sind. Ferner kann durch den Einsatz von verschiedenen thermoplastischen Kunststoffmaterialien das mechanische und thermische Eigenschaftsprofil der Umhüllung dem jeweiligen Anwendungsfall angepaßt werden. Darüber hinaus ist das erfindungsgemäße Verfahren deutlich schneller als ein bei metallischen Supraleitern bisher angewandtes klassisches Umspinnungs- oder Lackierverfahren.

Der erfindungsgemäß mit einer isolierenden Umhüllung überzogene Supraleiter kann nun ohne zusätzliche Isolationsfolie eingesetzt werden. Somit entfällt der durch das Mitwickeln einer Isolation verursachte Fertigungsaufwand.

Außerdem werden bei dem erfindungsgemäßen Verfahren auch die seitlichen Leiterkanten isoliert, womit die Gefahr von Kurzschlüssen in diesem Bereich verringert ist. Die Isolation ist insbesondere auch für dünne Bandleiter mit ungünstigem Aspektverhältnis geeignet. Dabei entfällt die bei Lackierverfahren gefürchtete Gefahr einer sogenannte "Kantenflucht", d.h. eine unerwünschte starke Schichtverdünnung im Bereich von Kanten mit kleinen Kantenradien, wie sie gerade bei dünnen Leiterbändern gegeben sind.

Ferner braucht bei dem erfindungsgemäßen Verfahren der Supraleiter mechanisch nicht zu stark belastet zu werden. Die mechanische Belastung beschränkt sich nämlich auf die durch Leiterabwickler bzw. -aufwickler erzeugten geringen Zugkräfte. Eine Leiterumlenkung während des Beschichtungsprozesses kann also vorteilhaft vermieden werden.

Fertige HTS-Leiter dürfen bekanntlich nur bis zu einem verhältnismäßig niedrigen Temperaturniveau von beispielsweise 200°C und auch dann nur verhältnismäßig kurzfristig erwärmt werden, um eine Degradation der Supraleitungseigenschaften zu vermeiden. Beim erfindungsgemäßen Verfahren können bekannte thermoplastische Werkstoffe mit entsprechend niedriger Verarbeitungs- bzw. Schmelztemperatur eingesetzt werden, so daß die Gefahr einer Degradation nicht gegeben ist.

Außerdem können mit dem erfindungsgemäßen Verfahren vorteilhaft nicht nur Umhüllungen mit allseitig etwa gleichmäßiger Dicke ausgebildet werden. Vielmehr läßt sich eine derart gestaltete Austrittsöffnung der Düse vorsehen, daß deren Beabstandung bezüglich des Leiters in dessen Umfangsrichtung gesehen ungleichmäßig ist. Auf diese Weise können insbesondere bestimmte Abstände zwischen benachbarten Leitern festgelegt werden.

Besonders vorteilhaft wird das erfindungsgemäße Verfahren zum Umhüllen eines bandförmigen Supraleiters mit einem Aspektverhältnis von mindestens 10 verwendet. Gerade derartige Supraleiter, die zudem noch nur eine geringe Dicke haben können, sind mit bekannten Beschichtungsverfahren nur schwer und nur unter der Gefahr der erwähnten Kantenflucht zu beschichten.

Das erfindungsgemäße Verfahren kann ebensogut auch zur Umhüllung von supraleitenden Mehrfach- oder -Verbundleitern verwendet werden. Derartige Leiter weisen einen Aufbau aus mehreren supraleitenden Leiterteilen oder -Leiterbereichen auf, wobei mindestens ein supraleitender Einzelleiter bzw. eine solche Leiterader vorgesehen sind. Gerade ein entsprechender Aufbau läßt sich mit dem erfindungsgemäßen Verfahren besonders einfach und gleichmäßig mit einer isolierenden Umhüllung ohne die Gefahr einer Beeinträchtigung der Leitereigenschaften des Supraleitermaterials versehen. Auch diese Leitertypen können eine Bandform aufweisen.

Vorteilhafte Ausgestaltungen des erfindungsgemäßen Verfahrens und der Verwendung dieses Verfahrens gehen aus den jeweils abhängigen Ansprüchen hervor.

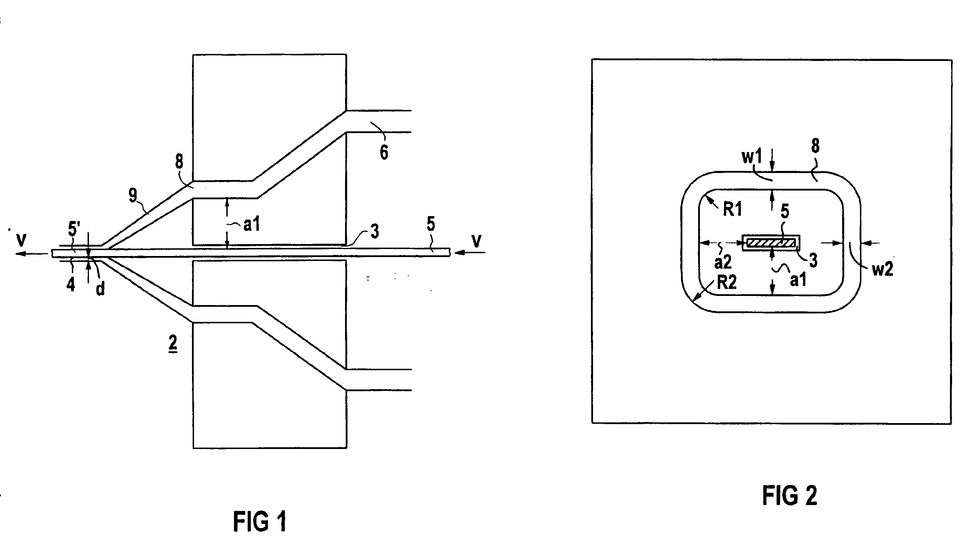

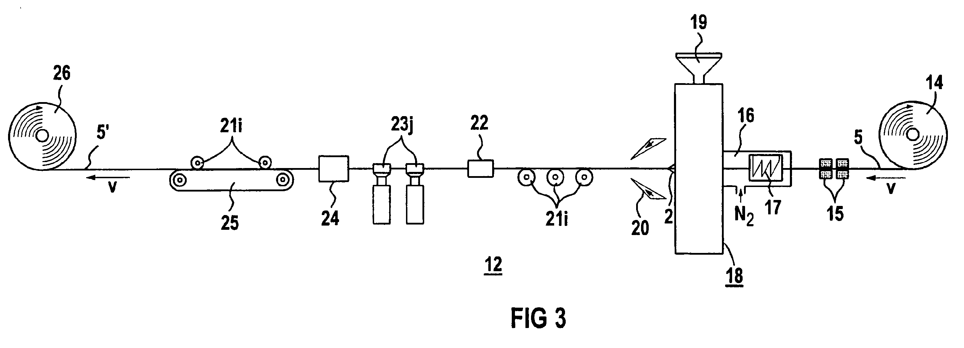

Die Erfindung wird nachfolgend anhand von Ausführungsbeispielen noch weiter erläutert. Dabei zeigen jeweils schematisch deren Figuren 1 und 2 eine Düse einer Anlage zur Durchführung des erfindungsgemäßen Verfahrens als Längsschnitt bzw. in Frontansicht sowie
deren Figur 3 eine Anlage zur Extrusionsbeschichtung eines HTS-Leiters mit einer Düse gemäß den Figuren 1 und 2.

In den Figuren sind sich entsprechende Teile mit denselben Bezugszeichen versehen. Nicht dargestellte Teile sind allgemein bekannt.

Bei einer zur Durchführung des erfindungsgemäßen Verfahrens vorzusehenden Anlage wird von an sich bekannten Vorrichtungen ausgegangen, wie sie zur Ummantelung von nicht-supraleitenden Drähten mit Kunststoffmaterialien mittels Extrusionsbeschichtung nach dem sogenannten Schlauch-Reckverfahren verwendet werden (vgl. die genannte US 3 893 642 oder die genannten DE-A-Schriften 2 022 802 und 21 10 934). Eine entsprechende Anlage (vgl. Figur 3) umfaßt einen sogenannten Extruder mit Extrusionskopf, der eine Extrusionsdüse aufweist, welche in den Figuren 1 und 2 im Längsschnitt bzw. in Frontansicht veranschaulicht ist. Diese allgemein mit 2 bezeichnete Düse enthält mittig einen Führungskanal 3. Durch diesen Kanal ist ein mit einer elektrisch isolierenden Umhüllung 4 zu versehender Supraleiter 5 in einer durch einen Pfeil v angedeuteten Vortriebsrichtung mit Hilfe von nicht dargestellten Vortriebsmitteln (vgl. Figur 3) zu führen. Gemäß dem angenommenen Ausführungsbeispiel handelt es sich bei dem Supraleiter 5 um einen bandförmigen HTS-Leiter. Dieser Leiter kann vorteilhaft vor dem Einführen in den Führungskanal 3 vorgeheizt werden. Gegebenenfalls ist statt dessen oder zusätzlich der Führungskanal selbst aufheizbar.

Das Isoliermaterial der Umhüllung 4 wird in dem nicht dargestellten Extruder (vgl. Figur 3) aufgeschmolzen, in den Extrusionskopf mit Verteilersystem gefördert und als Schmelze 6 in einen Düsenspalt 7 der Extrusionsdüse 2 gedrückt. An einer Austrittsöffnung 8 des Düsenspalts 7, dessen Spaltweite dort deutlich größer ist als die endgültige Dicke d der Umhüllung 4 um den Bandleiter 5 , tritt in der Vortriebsrichtung v gesehen ein Schmelzeschlauch 9 aus, der in Form eines Reckkegels aufgrund einer Fixierung seiner Kegelspitze am Bandleiter verstreckt und mit der am Bandleiter geforderten Schichtdicke d auf den Leiter aufgebracht wird. Ein am Führungskanal 3 vorteilhaft angelegtes Vakuum erzeugt im Innern des Reckkegels einen Unterdruck, der einen Einschluß von Luftblasen zwischen der Umhüllung und dem Leiter verhindert und der zusammen mit der Vorwärmung des Leiters einen guten Haftsitz der Umhüllung 4 auf dem Leiter gewährleistet. Der so umhüllte Bandleiter ist in der Figur 1 mit 5' bezeichnet.

Wie aus Figur 2 hervorgeht, hat die Düsenspaltöffnung 8 vorteilhaft eine an die Kontur des Bandleiters 5 angepaßte Form. Die somit weitgehend rechteckige Öffnung mit Abrundungen an den Ecken ist bezüglich der Flächen des Bandleiters um Abstände a1 und a2 beabstandet und wird durch Spaltweiten w1 und w2 sowie durch Krümmungsradien R1 und R2 in ihren Eckbereichen festgelegt. Die Abstände (al, a2) der Düsenspaltöffnung 8 vom Bandleiter 5, deren geometrische Gestaltung (w1, w2, R1, R2) und die Vortriebsgeschwindigkeit v des Leiters bestimmen die Kontur der Umhüllung 4 und deren Dicke d. Die geometrische Gestaltung der Extrusionsdüse kann dabei, wie für das Ausführungsbeispiel nach Figur 2 angenommen wurde, so gewählt werden, daß die Dicke d der Umhüllung 4 auf allen Seiten etwa gleich groß ist. Dabei wird im allgemeinen eine Dicke d von weniger als 0,5 mm eingeplant, beispielsweise zwischen 30 und 300 µm. Abweichend davon kann durch eine andere Gestaltung der Extrusionsdüsenöffnung, z.B. a2 < a1 und w1 < w2, bewirkt werden, daß sich an den Schmalseiten des Leiters Seitenlippen bilden. Solche Seitenlippen können dann als Abstandshalter beim Herstellen von Lagenwicklungen Verwendung finden und machen somit ein zusätzliches Mitwickeln von besonderen Abstandshaltern wie z.B. von Glaszwirn überflüssig. Auch kann die Kontur der Austrittsöffnung 8 des Düsenspalts dahingehend strukturiert sein, daß sich auf mindestens einer Seite des Leiters eine nicht-gleichmäßige Dicke der Umhüllung ergibt. Auf diese Weise ist z.B. mittels einer rinnenartigen Vertiefung in der Kontur der Öffnung 8 eine stegartige Wulst der Umhüllung zu erhalten, die dann als ein Abstandshalter dienen kann. Ferner kann man gegebenenfalls auch von einer exakt zentrischen Führung des Supraleiters durch den Führungskanal 3 absehen, um so eine ein- oder zweiseitig stärkere Umhüllung zu erzeugen.

Als isolierende Kunststoffmaterialien für die Umhüllung 4 kommen alle thermoplastischen Werkstoffe in Frage, die einerseits eine Verarbeitungs- bzw. Schmelztemperatur haben, die eine Beeinträchtigung der Supraleitungseigenschaften des zu umhüllenden Supraleiters, insbesondere HTS-Leiters 5 ausschließt und dennoch eine hinreichende Plastizität für das Extrusionsbeschichtungsverfahren gewährleistet. So sind z.B. für ein Umhüllen von bekannten HTS-Bändern mit in Ag eingebettetem HTS-Material aus Bi-Cuprat vom 2223-Typ Verarbeitungstemperaturen über 200°C zu vermeiden. Deshalb kommen in diesem Falle thermoplastische Materialien wie z.B. ein entsprechendes Polyethylen (PE), ein entsprechendes Polystyrol-Ethylen-Butylen-Elastomer (SEBS), ein entsprechendes Polyurethan-Elastomer (TPE-U), ein entsprechendes Ethylen/Vinylacetat-Copolymer (EVA) oder ein Acrylsäure/Acrylat-Copolymer in Frage. Bei Verwendung eines transparenten Isoliermaterials wie z.B. eines thermoplastischen Polyurethan-Elastomers kann zusätzlich die Isolierhülle mit Farbstoffen eingefärbt werden. Dadurch ist eine leichte optische Kontrolle der Umhüllung möglich. Falls es das verwendete HTS-Material zuläßt, sind auch Thermoplaste mit entsprechend höheren Verarbeitungstemperaturen geeignet. Beispiele hierfür wie Polyethylen-Terephthalat gehen aus der genannten DE 26 38 763 A hervor. Die konkrete Auswahl der thermoplastischen Isolationsmaterialien wird zusätzlich unter dem Gesichtpunkt vorgenommen, daß die eingesetzten Thermoplaste hinreichend gute Tieftemperatureigenschaften besitzen, um so Ausfälle unter Betriebsbedingungen und bei Abkühlungs- und Aufwärmvorgängen ausschließen zu können.

Das erfindungsgemäße Dünnschicht-Extrusionsbeschichtungsverfahren ist besonders zum Umhüllen von bandförmigen HTS-Leitern geeignet, deren Leiterbanddicke unter 1,5 mm, vorzugsweise unter 0,5 mm, liegt und die ein hohes Aspektverhältnis von mindestens 3, vorzugsweise mindestens 10, haben. Ein entsprechender HTS-Bandleiter kann beispielsweise eine Breite von 3,6 mm und eine Dicke von 0,25 mm besitzen. Als HTS-Materialien kommen dabei alle bekannten oxidischen Supraleitermaterialien mit hoher Sprungtemperatur in Frage, die insbesondere eine LN₂-Kühltechnik zulassen. Dabei sind als besonders geeignet Bi-Cupratmaterialien anzusehen, die hauptsächlich die sogenannte 2212-Phase (80 K-Phase) oder vorzugsweise die sogenannte 2223-Phase (110 K-Phase) zumindest zu einem überwiegenden Teil enthalten (vgl. z.B. "IEEE Transactions on Applied Superconductivity", Vol. 7, No. 2, Juni 1997, Seiten 355 bis 358). Das Bi-Cupratmaterial kann dabei zusätzlich Pb enthalten ( sogenanntes "BPSCCO" ).

Bandförmige HTS-Leiter mit erfindungsgemäß erstellten Umhüllungen sind außerdem zumeist mit einer zusätzlichen keramischen Oberflächenbeschichtung versehen, die ein Versintern der eigentlichen, metallischen Außenseiten bzw. Oberflächen des Leiters, die bevorzugt aus Ag oder einer Ag-Legierung wie AgMg bestehen, während erforderlicher Reaktionsglühungen verhindern sollen.

Gemäß einem konkreten Ausführungsbeispiel wurde ein entsprechender 2223-BPSCCO/Ag-Bandleiter mit einem thermoplastischen Polyurethan-Elastomer bei 190°C beschichtet. Eine entsprechende Beschichtungsanlage ist in Figur 3 angedeutet. Diese allgemein mit 12 bezeichnete Anlage weist in Bandführungsrichtung v gesehen hintereinander die folgenden Teile auf, nämlich
eine Abwickelvorrichtung (sogenannter "Abwickler") 14, von der der zu beschichtende HTS-Bandleiter 5 abgewickelt wird, eine Filzbremse 15,
eine N₂-Schutzgasspülung 16 zur Vermeidung von Oxidation, eine berührungslose induktive Leiterheizung 17, um den Leiter zumindest annähernd auf die Verarbeitungstemperatur des verwendeten thermoplastischen Isolationsmaterials wie z.B. von einem thermoplastischen Polyurethan-Elastomer aufzuheizen, eine Extrusionsbeschichtungsvorrichtung (sogenannter "Extruder") 18 mit Nachfülltrichter 19 für das thermoplastische Isoliermaterial, einem Extrusionskopf mit eingebauter Extrusiondüse 2,
eine Luftdusche 20,
mehrere Führungsrollen 21i,
einen Porendetektor 22 zur Überwachung der aufgebrachten Umhüllung,
mindestens ein Kaltluftgebläse 23j,
eine zerstörungsfreie Isolierschichtdickenüberwachung 24, einen Bandabzug 25 sowie
eine kraftgesteuerte Aufwickelvorrichtung (sogenannter "Aufwickler") 26 zur Aufnahme des mit der Umhüllung aus dem verfestigten bzw. erkalteten thermoplastischen Polyurethan-Elastomer versehenen Bandleiters 5'.

Dabei kann auch durch die Wahl einer geeigneten Bandabzugsgeschwindigkeit die Dicke d der Umhüllung beeinflußt werden. So kann z.B. bei einer Leiterdurchlaufgeschwindigkeit von etwa 5 m/min eine Umhüllung von etwa 50 µm Dicke erzeugt werden. Zur Haftverbesserung der Umhüllung auf der Leiteroberfläche wird der Leiter mittels der Leiterheizung 17 induktiv vorgeheizt, beispielsweise auf ein Temperaturniveau zwischen 180° und 195°C. Diese Vorwärmung des Leiters erfolgt vorteilhaft unter Schutzgasatmosphäre, um Oxidbildungen auf der Leiteroberfläche zu vermeiden, die sich negativ auf die Haftung der isolierenden Umhüllungsschicht auf dem Leiter auswirken können. Eine mögliche Vorwärmung eines Leiters ist zwar prizipiell bekannt; allerdings liegen die bisher angewandten Vorwärmtemperaturen deutlich niedriger als die für Supraleiter vorzusehenden Verarbeitungstemperaturen der Thermoplaste. Um eine wirklich gute adhäsive Bindung des Isoliermaterials auf dem Leiter sicherzustellen, ist aber eine Leitervorwärmung zumindest annähernd auf die Höhe der Verarbeitungstemperatur unabdingbar. Beim Auftreffen einer heißen Thermoplastschmelze auf einen unzureichend vorgewärmten Leiter käme es nämlich zu einem unerwünschten sofortigen Einfrieren und Erstarren der Schmelze an der Kontaktfläche; und damit wäre eine ausreichende Benetzung der Leiteroberfläche durch die Schmelze verhindert. Eine gute Benetzung ist aber Voraussetzung für die Ausbildung einer Adhäsionshaftung. Unterstützt wird diese Haftung durch den erwähnten Unterdruck im Reckkegel. Beim anschließenden Beschichtungsprozeß dienen die hinter dem Extruder 18 angebrachten Luftdüsen der Luftdusche 20, ein eventuell noch vorhandener Gegenstromkühler sowie das Gebläse 23j zur schnelleren Abkühlung und Verfestigung der aufgebrachten Umhüllungsschicht aus dem thermoplastischen Isoliermaterial. Weiterhin erfolgt eine on-line Prüfung auf Isolationsfehler durch einen zerstörungsfrei arbeitenden Porendetektor 22 und eine Überwachung der aufgebrachten Isolierschichtdicke z.B. mittels Laseranordnung 24. Aufgrund der schnellen Abkühlung und Verfestigung der Umhüllung kann ein Verkleben der Umhüllungen beim anschließenden Aufwickeln des Leiters 5' auf dem Aufwickler 26 verhindert werden. Zusätzlich kann dort als Zwischenlage eine Trennschicht z.B. aus Papier mit dem Leiter auf den als Vorratsspule dienenden Aufwickler 26 gewickelt werden, um dort ein Verkleben des Leiters während der Lagerung auszuschließen. Statt dessen kann die Umhüllung des Leiters mit einem hierfür geeigneten Puder, beispielsweise aus Talkum, versehen werden.

Bei dem vorstehend beschriebenen Verfahren wurde davon ausgegangen, daß es sich bei dem zu beschichtenden Supraleiter um einen HTS-Bandleiter handelt. Das erfindungsgemäße Verfahren ist zwar als besonders vorteilhaft für ein Umhüllen derartiger Leiter anzusehen. Es kann jedoch ebensogut auch für Leiter unter Verwendung von sogenanntem klassischen, d.h. metallischem Supraleitermaterial wie z.B. von Nb₃Sn vorgesehen werden.

## Patentansprüche

1. Verfahren zur Herstellung einer allseitigen Umhüllung aus einem elektrischen Isolationsmaterial aus Kunststoff um mindestens einen Supraleiter,
**dadurch gekennzeichnet, dass** zu einem kontinuierlichen Umhüllungsprozeß bei einer die Supraleitungseigenschaften des Leiters (5) praktisch nicht beeinträchtigenden Verfahrenstemperatur
- der Leiter (5) aus einem sich in einer Vortriebsrichtung (v) erstreckenden Führungskanal (3) austritt,
- ein Schmelzeschlauch (9) aus einem geschmolzenen thermoplastischen Isolationsmaterial (6) in der Vortriebsrichtung (v) aus einer Düse (2) extrudiert wird, deren Austrittsöffnung (8) den Leiter (5) unter allseitiger Beabstandung umgibt,
- mit dem Vortrieb des Leiters (5) der Schmelzeschlauch (9) gedehnt und auf die Leiteroberfläche gezogen wird sowie
- der so auf die Leiteroberfläche aufgebrachte Schmelzeschlauch (9) durch Abkühlung verfestigt wird und wobei
- mindestens ein bandförmiger, oxidischer Hoch-T_{c-}Supraleiter mit einem Aspektverhältnis von mindestens 3 mit der Umhüllung (4) versehen wird.

2. Verfahren nach Anspruch 1,
**dadurch gekennzeichnet, dass** der Leiter (5) vor dem Einführen in den Führungskanal (3) vorgeheizt wird.

3. Verfahren nach Anspruch 1 oder 2,
**dadurch gekennzeichnet, dass** der Führungskanal (3) aufgeheizt wird.

4. Verfahren nach Anspruch 2 oder 3,
**dadurch gekennzeichnet, dass** der Leiter (5) zumindest annähernd auf die Verfahrenstemperatur aufgeheizt wird.

5. Verfahren nach einem der Ansprüche 2 bis 4,
**dadurch gekennzeichnet, dass** der Leiter (5) unter einer Schutzgasatmosphäre aufgeheizt wird.

6. Verfahren nach einem der Ansprüche 1 bis 5,
**dadurch gekennzeichnet, dass** zum Aufbringen des Schmelzeschlauchs (9) auf die Leiteroberfläche der Innenraum des Schlauchs evakuiert wird.

7. Verfahren nach einem der Ansprüche 1 bis 6,
**dadurch gekennzeichnet, dass** der Schmelzeschlauch (9) um einen Reckgrad zwischen 5 und 15 gedehnt wird.

8. Verfahren nach einem der Ansprüche 1 bis 7,
**dadurch gekennzeichnet, dass** der aus der Düse (2) ausgetretene, mit der Umhüllung (4) versehene Leiter (5') einer Abkühlungsbehandlung unterzogen wird.

9. Verfahren nach einem der Ansprüche 1 bis 8,
**dadurch gekennzeichnet, dass** als thermoplastisches Material ein Polyethylen, ein Polystyrol-Ethylen-Butylen-Elastomer, ein Polyurethan-Elastomer, ein Ethylen/Vinylacatat-Copolymer oder ein Acrylsäure/Acrylat-Copolymer vorgesehen wird.

10. Verfahren nach einem der Ansprüche 1 bis 9,
**dadurch gekennzeichnet, dass** eine derart gestaltete Austrittsöffnung (8) der Düse (2) vorgesehen wird, daß deren Beabstandung bezüglich des Leiters (5) in dessen Umfangsrichtung gesehen ungleichmäßig ist.

11. Verwendung des Verfahrens nach einem der Ansprüche 1 bis 10 zum Umhüllen eines bandförmigen Supraleiters mit einem Aspektverhältnis von mindestens 10.

12. Verwendung nach Anspruch 11 zum Umhüllen eines Supraleiters mit einer Banddicke von höchstens 1,5 mm, vorzugsweise höchstens 0,5 mm.

13. Verwendung nach Anspruch 11 oder 12 zum Umhüllen eines Supraleiters mit mehreren in ein normalleitendes Material eingebetteten Leiterkernen aus Supraleitermaterial.

14. Verwendung des Verfahrens nach einem der Ansprüche 1 bis 10 zum Umhüllen eines supraleitenden Mehrfach- oder Verbundleiters, der mindestens einen supraleitenden Einzelleiter oder -Leiterkern umfaßt.

15. Verwendung nach Anspruch 14 zum Umhüllen eines Mehrfach- oder Verbundleiters mit einer Bandform.

16. Verwendung nach Anspruch 14 oder 15 zum Umhüllen eines Mehrfach- oder Verbundleiters mit mindestens einem Einzelleiter, der mehrere in ein normalleitendes Material eingebettete Leiterkerne aus Supraleitermaterial enthält.

17. Verwendung nach einem der Ansprüche 11 bis 16 zum Umhüllen eines bandförmigen Supraleiters (5) mit einer Umhüllung (4), deren Dicke (d) auf mindestens zwei Seiten des Leiters höchstens 0,5 mm, vorzugsweise höchstens 0,3 mm beträgt.

18. Verwendung nach einem der Ansprüche 11 bis 17 zum Umhüllen eines bandförmigen Supraleiters (5) mit einer Umhüllung (4), deren Dicke (d) an den Schmalseiten des Leiters größer ist als an den Breitseiten.

19. Verwendung nach einem der Ansprüche 11 bis 18 zum Umhüllen mindestens eines Supraleiters mit Supraleitermaterial aus einem Bi-Cuprat, das in Ag zumindest enthaltendes normalleitendes Material eingebettet ist.

## Claims

1. A method of producing an all-round sheathing of an electrically insulating plastic material around at least one superconductor, **characterised in that**, for the purpose of a continuous sheathing process at a method temperature which scarcely impairs the superconducting properties of the conductor (5)
- the conductor (5) exits from a guide passage (3) extending in a feed direction (v),
- a fused tube (9) of a molten thermoplastic insulating material (6) is extruded in the feed direction (v) from a nozzle (2), the discharge opening (8) of which surrounds the conductor (5) with a gap in all directions,
- the fused tube (9) is stretched and drawn on to the surface of the conductor with the advance of the conductor (5) and
- the fused tube (9) thus applied to the surface of the conductor is solidified by cooling and wherein
- at least one strip-shaped oxidic high-T_{c} superconductor with an aspect ratio of at least (3) is provided with the sheath (4).

2. A method as claimed in claim 1, **characterised in that** the conductor (5) is preheated before being introduced into the guide passage (3).

3. A method as claimed in claim 1 or 2, **characterised in that** the guide passage (3) is heated.

4. A method as claimed in claim 2 or 3, **characterised in that** the conductor (5) is heated at least approximately to the method temperature.

5. A method as claimed in one of claims 2 to 4, **characterised in that** the conductor (5) is heated under a protective gas atmosphere.

6. A method as claimed in one of claims 1 to 5, **characterised in that** the interior of the tube is evacuated for the application of the fused tube (9) to the surface of the conductor.

7. A method as claimed in one of claims 1 to 6, **characterised in that** the fused tube (9) is stretched by a degree of elongation of between 5 and 15.

8. A method as claimed in one of claims 1 to 7, **characterised in that** the conductor (5'), which has exited form the nozzle (2) and is provided with the sheath (4), is subjected to a cooling treatment.

9. A method as claimed in one of claims 1 to 8, **characterised in that** a polyethylene, a polystyrol-ethylene-butylene-elastomer, a polyurethan-elastomer, an ethylen/vinylacetate-copolymer or an acrylic-acid/acrylate-copolymer is provided as the thermoplastic material.

10. A method as claimed in one of claims 1 to 9, **characterised in that** a discharge opening (8) of the nozzle (2) is provided which is so shaped that its spacing with respect to the conductor (5) is non-uniform, seen in its peripheral direction.

11. The use of the method as claimed in one of claims 1 to 10 for sheathing a strip-shaped superconductor with an aspect ratio of at least 10.

12. The use as claimed in claim 11 for sheathing a superconductor with a strip thickness of at most 1.5mm, preferably at most 0.5mm.

13. The use as claimed in claim 11 or 12 for sheathing a superconductor with a plurality of conductor cores of super-conducting material imbedded in a normally conductive material.

14. The use of the method as claimed in one of claims 1 to 10 for sheathing a multiconductor or composite conductor, which includes at least one super-conducting individual conductor or conducting core.

15. The use as claimed in claim 14 for sheathing a multiconductor or composite conductor with a strip shape.

16. The use as claimed in claims 14 or 15 for sheathing a multiconductor or composite conductor with at least one individual conductor, which includes a plurality of conducting cores of superconductor material imbedded in a normally conducting material.

17. The use as claimed in one of claims 11 to 16 for sheathing a strip-shaped superconductor (5) with a sheath (4), the thickness (d) of which is at most 0.5mm, preferably at most 0.3mm, on at least two sides of the conductor.

18. The use as claimed in one of claims 11 to 17, for sheathing a strip-superconductor with a sheath (4), the thickness (d) of which on the narrow sides of the conductor is larger than on the wide sides.

19. The use as claimed in one of claims 11 to 18 for sheathing at least one superconductor with super-conducting material comprising a bi-cuprate, which is imbedded in normally conducting material including at least Ag.

## Revendications

1. Procédé pour la fabrication d'une gaine complète en un matériau d'isolation électrique en matière plastique autour d'au moins un supraconducteur,
**caractérisé en ce que**
pour un processus de gainage continu à une température de traitement ne dégradant pratiquement pas les propriétés de supraconductivité du conducteur (5),
- le conducteur (5) sort d'un canal de guidage (3) s'étendant dans une direction d'avancement (v),
- un tuyau fondu (9) en un matériau d'isolation thermoplastique fondu (6) est extrudé dans la direction d'avancement (v) hors d'une buse (2), dont l'ouverture de sortie (8) entoure le conducteur (5) à distance sur tous les côtés,
- le tuyau fondu (9) est étendu avec l'avancement du conducteur (5) et est tiré sur la surface du conducteur, et
- le tuyau fondu (9) ainsi appliqué sur la surface du conducteur est solidifié par refroidissement, et dans lequel
- au moins un supraconducteur en forme de bande de type oxyde à température critique T_{c} élevée, est pourvu d'un rapport de forme d'au moins 3 avec la gaine (4).

2. Procédé selon la revendication 1,
**caractérisé en ce que**
le conducteur (5) est préchauffé avant son introduction dans le canal de guidage (3).

3. Procédé selon la revendication 1 ou 2,
**caractérisé en ce que**
le canal de guidage (3) est préchauffé.

4. Procédé selon la revendication 2 ou 3,
**caractérisé en ce que**
le conducteur (5) est chauffé au moins approximativement à la température du procédé.

5. Procédé selon l'une des revendications 2 à 4,
**caractérisé en ce que**
le conducteur (5) est chauffé sous une atmosphère de gaz protecteur.

6. Procédé selon l'une des revendications 1 à 5,
**caractérisé en ce que**
l'espace intérieur du tuyau est mis sous vide pour l'application du tuyau fondu (9) sur la surface du conducteur.

7. Procédé selon l'une des revendications 1 à 6,
**caractérisé en ce que**
le tuyau fondu (9) est allongé avec un degré d'allongement compris entre 5 et 15.

8. Procédé selon l'une des revendications 1 à 7,
**caractérisé en ce que**
le conducteur (5') pourvu de la gaine (4) sortant de la buse (2) est soumis à un traitement de refroidissement.

9. Procédé selon l'une des revendications 1 à 8,
**caractérisé en ce que**
l'on prévoit comme matériau thermoplastique un polyéthylène, un élastomère polystyrène-éthylène-butylène, un élastomère polyuréthane, un copolymère éthylène-acétate de vinyle, ou un copolymère acide acrylique-acrylate.

10. Procédé selon l'une des revendications 1 à 9,
**caractérisé en ce que**
l'on prévoit une ouverture de sortie (8) de la buse (2) configurée de telle manière que son espacement par rapport au conducteur (5) ne soit pas uniforme quand on le considère dans sa direction périphérique.

11. Utilisation du procédé selon l'une des revendications 1 à 10 pour le gainage d'un supraconducteur en forme de bande avec un rapport de forme d'au moins 10.

12. Utilisation selon la revendication 11 pour le gainage d'un supraconducteur avec une épaisseur de bande de 1,5 mm au maximum, de préférence de 0,5 mm au maximum.

13. Utilisation selon la revendication 11 ou 12 pour le gainage d'un supraconducteur avec plusieurs noyaux de conducteur en matériau supraconducteur noyés dans un matériau normalement conducteur.

14. Utilisation du procédé selon l'une des revendications 1 à 10 pour le gainage d'un conducteur composite ou multiple supraconducteur, qui comprend au moins un conducteur unique ou un noyau de conducteur unique supraconducteur.

15. Utilisation selon la revendication 14 pour le gainage d'un conducteur composite ou multiple avec une forme de bande.

16. Utilisation selon la revendication 14 ou 15 pour le gainage d'un conducteur composite ou multiple avec au moins un conducteur unique, qui contient plusieurs noyaux de conducteur en matériau supraconducteur noyés dans un matériau normalement conducteur.

17. Utilisation selon l'une quelconque des revendications 11 à 16 pour le gainage d'un supraconducteur en forme de bande (5) avec une gaine (4), dont l'épaisseur (d) vaut 0,5 mm au maximum, de préférence 0,3 mm au maximum, sur au moins deux côtés du conducteur.

18. Utilisation selon l'une des revendications 11 à 17 pour le gainage d'un supraconducteur en forme de bande (5) avec une gaine (4), dont l'épaisseur (d) est plus grande sur les côtés étroits du conducteur que sur les côtés larges.

19. Utilisation selon l'une des revendications 11 à 18 pour le gainage d'au moins un supraconducteur avec un matériau supraconducteur en un cuprate de Bi, qui est noyé dans un matériau normalement conducteur contenant au moins de l'argent (Ag).
